# EUROPÄISCHE PATENTANMELDUNG

(11) **EP 1 870 865 A1**
(43) Veröffentlichungstag der Anmeldung: **26.12.2007**
(21) Anmeldenummer: 06115833.3
(22) Anmeldetag: 21.06.2006
(51) Int. Cl.: G08B 29/00

(54) **Spannungsversorgung eines Gefahrenmelders**

(71) Anmelder: Siemens Schweiz AG, 8047 Zürich (CH)
(72) Erfinder: Vollenweider, Walter, 6312, Steinhausen (CH)
(74) Vertreter: Berg, Peter

(57) **Zusammenfassung**

Die Erfindung beschreibt ein Verfahren zur Spannungsversorgung eines eine Schaltanordnung mit elektrochemischen Spannungsquellen (B) umfassenden drahtlos betriebenen Gefahrenmelders bei einem Notbetrieb der Schaltanordnung. Erfindungsgemäss wird bei der Schaltanordnung zu jeder in Serie geschalteten elektrochemischen Spannungsquelle (B) eine Diode (D) in Sperrichtung parallel geschaltet, wobei die Anzahl der zu verwendenden chemischen Spannungsquellen (B) derart gewählt wird, dass bei einem Ausfall einer Spannungsquelle (B) die für den Gefahrenmelder erforderliche Betriebsspannung zuzüglich der Flussspannung einer der in Sperrrichtung parallel geschalteten Dioden (D) erzeugt werden kann.

## Beschreibung

Die Erfindung betrifft ein Verfahren zur Spannungsversorgung eines eine Schaltanordnung mit elektrochemischen Spannungsquellen umfassenden Gefahrenmelders bei einem Notbetrieb der Schaltanordnung.

Geräte, die von elektrochemischen Spannungsquellen mit Spannung versorgt werden, fallen häufig aus, weil diese Spannungsquellen oder deren Verbindungen bzw. Anschlüsse defekt sind. Geräte mit einer wichtigen Funktion, wie beispielsweise drahtlos betriebene Gefahrenmelder zur Detektion von Bränden, Gefahren, Einbrüchen, Bewegungen etc. müssen deshalb derart mit Spannung versorgt werden, dass eine elektrochemische Spannungsquelle oder deren Anschluss ausfallen kann ohne dass die Funktion des Gerätes unmittelbar beeinträchtigt wird. Unter drahtlos betriebene Gefahrenmelder sind Gefahrenmelder zu verstehen, die keine physische Verbindung wie zum Beispiel ein Kabel mit einer Gefahrenmeldezentrale aufweisen. Die Kommunikation zwischen Gefahrenmeldezentrale und Gefahrenmelder geschieht über die Luftschnittstelle.

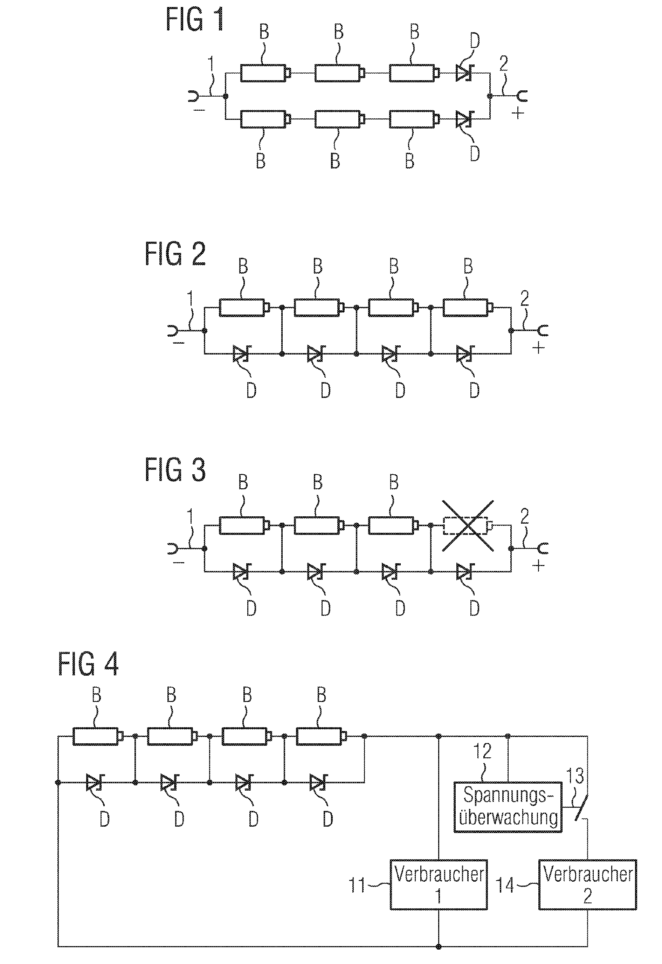

In vielen Fällen ist eine Betriebsspannung erforderlich, die höher als die Spannung einer elektrochemischen Spannungsquelle ist. Deshalb werden häufig elektrochemische Spannungsquellen in Serie geschaltet. Zwei Stränge von in Serie geschalteten elektrochemischen Spannungsquellen werden, wie in Figur 1 dargestellt, über Dioden parallel geschaltet. Üblicherweise liefern die beiden Stränge je ungefähr die Hälfte des benötigten Betriebsstromes für den Gefahrenmelder. Wenn der eine Strang ausfällt, kann aufgrund der Anzahl an elektrochemischen Spannungsquellen der andere Strang den erforderliche Betriebsstrom aufrechterhalten. Wenn also beispielsweise eine Betriebsspannung von 2,2 V erforderlich ist und als Entladeschlussspannung einer elektrochemischen Spannungsquelle 0,9 V angenommen wird, müssen in jedem Strang drei elektrochemische Spannungsquellen in Serie geschaltet werden. Die Entladeschlussspannung der gesamten Schaltanordnung ist somit 2,7 V. Die Flussspannung der Dioden darf 0,5 V sein, damit die zulässige Betriebsspannung für den Gefahrenmelder nicht unterschritten wird. Es werden also für die Schaltanordnung sechs elektrochemische Spannungsquellen und zwei Dioden benötigt.

Die Aufgabe der vorliegenden Erfindung ist darin zu sehen, eine wirtschaftliche und einfache Möglichkeit vorzuschlagen, damit mit möglichst wenig elektrochemischen Spannungsquellen die Betriebsspannung eines Gefahrenmelders bei einem Notbetrieb aufrechterhalten bleibt.

Die Aufgabe wird erfindungsgemäß jeweils durch die Gegenstände der unabhängigen Patentansprüche gelöst. Weiterbildungen der Erfindung sind in den Unteransprüchen angegeben.

Ein Kern der Erfindung ist darin zu sehen, dass einer Schaltanordnung zur Stromversorgung des Gefahrenmelders zu jeder in Serie geschalteten elektrochemischen Spannungsquelle eine Diode in Sperrichtung parallel geschaltet wird, wobei die Anzahl der zu verwendenden chemischen Spannungsquellen (B) derart gewählt wird, dass bei einem Ausfall einer Spannungsquelle (B) die für den Gefahrenmelder erforderliche Betriebsspannung zuzüglich der Flussspannung einer der in Sperrrichtung parallel geschalteten Dioden (D) erzeugt werden kann. Dadurch können je nach der erforderlichen Betriebsspannung mehr oder weniger elektrochemischen Spannungsquellen und Dioden in Serie geschaltet werden. Die Anzahl der für die Schaltanordnung zu verwendenden chemischen Spannungsquellen entspricht dabei der Anzahl an Spannungsquellen, die zum Erreichen der erforderlichen Betriebsspannung zuzüglich der Flussspannung einer der in Sperrichtung parallel geschalteten Dioden benötigt wird, zuzüglich mindestens einer weiteren Spannungsquelle. Als chemische Spannungsquellen können wieder aufladbare Akkumulatoren, Primärzellen etc. verwendet werden. Die chemischen Spannungsquellen haben idealerweise die gleiche Spannung und sind also gleich groß. Als Dioden werden vorzugsweise Dioden mit einer geringen Flussspannung verwendet. Derartige Dioden können zum Beispiel Schottkydioden sein.

Es sei darauf hingewiesen, dass Schaltanordnungen die aus in Serie geschalteten elektrochemischen Spannungsquellen und dazu in Sperrichtung geschalteten Dioden bestehen, bekannt sind, wobei diese bekannten Anordnungen den Zweck verfolgen, dass die mindest erforderliche Anzahl an Spannungsquellen verwendet wird. In der Folge unterschreitet im Falle der bekannten Schaltanordnungen die Speisespannung den erforderlichen Wert, wenn eine der elektrochemischen Spannungsquellen oder deren Anschlüsse ausfällt, was bei der erfindungsgemässen Schaltanordnung nicht der Fall ist. Eine solche bekannte Schaltanordnung ist beispielsweise in einer Produktbroschüre der Firma Sonnenschein Lithium (Sonnenschein Lithium Batterien, Technische Broschüre, Seite 22, 7. Schaltungsbeispiele und Hinweise zum Gebrauch, Elektro.tec GmbH, Berlin http://www.lithium-batterie.de) enthalten. Die dort gezeigte Schaltanordnung wird jedoch zum Überentladeschutz, zum Schutz gegen Laden und zum Schutz gegen einen Kurzschluss der Schaltanordnung verwendet.

Die erfindungsgemässe Schaltanordnung kann bei einem Notbetrieb der Schaltanordnung, das heißt wenn eine elektrochemische Spannungsquelle oder deren Verbindung ausgefallen ist, auch zur zumindest teilweisen Speisung eines aus Baugruppen bestehenden Gefahrenmelders verwendet werden, indem eine oder mehrere Baugruppen, die für die Gewährleistung der Funktionalität eine untergeordnete Rolle spielen, nicht mit Spannung versorgt werden.

Ein Vorteil dieser Erfindung besteht darin, dass durch die Schaltanordnung deutlich weniger elektrochemische Spannungsquellen notwendig sind und somit die Anzahl an redundanten Spannungsquellen verringert werden kann.

Die Erfindung wird anhand eines in einer Figur dargestellten Ausführungsbeispiels näher erläutert. Dabei zeigen
- Figur 1: eine bekannte Schaltanordnung zur Stromversorgung eines Gerätes
- Figur 2: eine erfindungsgemässe Schaltanordnung,
- Figur 3: eine erfindungsgemässe Schaltanordnung, die eine defekte elektrochemische Spannungsquelle aufweist,
- Figur 4: eine zur Stromversorgung der Baugruppen eines Gefahrenmelders verbundene erfindungsgemässe Schaltanordnung.

Figur 1 zeigt eine bekannte Schaltanordnung zur Stromversorgung eines Gerätes. Zwei Stränge von in Serie geschalteten elektrochemischen Spannungsquellen B werden über zwei Dioden D parallel geschaltet werden. Normalerweise liefern die beiden Stränge je ungefähr die Hälfte des benötigten Betriebsstromes für den Gefahrenmelder. Wenn der eine Strang ausfällt, kann aufgrund der Anzahl an elektrochemischen Spannungsquellen B, der andere Strang den erforderlichen Betriebsstrom aufrechterhalten.

Figur 2 zeigt eine erfindungsgemässe Schaltungsanordnung. Hierzu wird beispielsweise die gleiche Anzahl an elektrochemische Spannungsquellen B wie in einem Strang gemäss Figur 1 zuzüglich einer weiteren Spannungsquelle B verwendet, die in Serie geschaltet sind. Zu jeder elektrochemischen Spannungsquelle B wird eine Diode in Sperrichtung parallel geschaltet. Je nach der gewünschten Betriebsspannung, die zwischen dem negativen Anschluss 1 und dem positiven Anschluss 2 anliegt, können mehr oder weniger derartige Spannungsquellen-Dioden-Paare in Serie geschalten werden.

Figur 3 zeigt eine erfindungsgemässe Schaltanordnung, die eine defekte elektrochemische Spannungsquelle aufweist. Durch die erfindungsgemässe Anordnung wird die Funktion des Gefahrenmelders gewährleistet, da die restliche zur Verfügung stehende Spannung noch immer grösser als die benötigte Betriebsspannung ist.

Figur 4 zeigt eine zur Stromversorgung der Baugruppen eines Gefahrenmelders verbundene erfindungsgemässe Schaltanordnung. Derartige Baugruppen sind Verbraucher, wie zum Beispiel eine Kommunikationseinheit, eine Detektionseinheit, eine zweite Detektionseinheit, eine Alarmsignalisierungseinheit etc. Die Anordnung der elektrochemischen Spannungsquellen und Dioden entspricht Figur 2. An die Schaltanordnung ist ein erster Verbraucher 11 angeschlossen, der möglichst immer und insbesondere auch dann betrieben werden soll, wenn eine einzelne Spannungsquelle oder die Verbindung zu ihr ausfällt. Im Weiteren ist ein zweiter Verbraucher 14 angeschlossen, der nur dann betrieben wird, wenn alle Spannungsquellen und ihre Anschlüsse in einwandfreien Zustand sind. Es ist deshalb eine Spannungsüberwachung 12 oder eine andere geeignete Vorrichtung vorhanden, die es erlaubt zu erkennen, ob die Schaltanordnung sich im Notbetrieb befindet, also, ob eine Spannungsquelle ausgefallen ist und dadurch ein Spannungsabfall registriert werden kann. Falls die Schaltanordnung ordnungsgemäß funktioniert wird der Schalter 13 geschlossen oder mit einer anderen geeigneten Maßnahme der Verbraucher 14 in Betrieb genommen. Besonders vorteilhaft ist dabei, dass in diesem Fall nur der erste Verbraucher 11 so ausgelegt werden muss, dass er mit der im Fehlerfall verminderten Spannung funktioniert. Der zweite Verbraucher 14 kann dagegen so ausgelegt werden, dass er mit der im Fehlerfall vorhandenen Spannung versagen würde und nur dann ordnungsgemäß funktioniert, wenn die normale Betriebsspannung anliegt.

## Patentansprüche

1. Verfahren zur Spannungsversorgung eines eine Schaltanordnung mit elektrochemischen Spannungsquellen (B) umfassenden drahtlos betriebenen Gefahrenmelders bei einem Notbetrieb der Schaltanordnung,
**dadurch gekennzeichnet,**
**dass** bei der Schaltanordnung zu jeder in Serie geschalteten elektrochemischen Spannungsquelle (B) eine Diode (D) in Sperrichtung parallel geschaltet wird, wobei die Anzahl der zu verwendenden chemischen Spannungsquellen (B) derart gewählt wird, dass bei einem Ausfall einer Spannungsquelle (B) die für den Gefahrenmelder erforderliche Betriebsspannung zuzüglich der Flussspannung einer der in Sperrrichtung parallel geschalteten Dioden (D) erzeugt werden kann.

2. Verfahren nach Anspruch 1,
**dadurch gekennzeichnet,**
**dass** als Anzahl der chemischen Spannungsquellen (B) die Anzahl an Spannungsquellen (B), die zum Erreichen der erforderlichen Betriebsspannung zuzüglich der Flussspannung einer der Dioden (D) im Notbetrieb erforderlich sind, zuzüglich mindestens einer weiteren Spannungsquelle verwendet wird.

3. Verfahren nach einem der vorangegangenen Ansprüche,
**dadurch gekennzeichnet,**
**dass** als chemische Spannungsquellen (B) elektrochemische Primärzellen und/oder aufladbare Akkumulatoren verwendet werden.

4. Verfahren nach einem der vorangegangenen Ansprüche,
**dadurch gekennzeichnet,**
**dass** die chemischen Spannungsquellen (B) die gleiche Spannung aufweisen.

5. Verfahren nach einem der vorangegangenen Ansprüche,
**dadurch gekennzeichnet,**
**dass** als Dioden (D) bei der Schaltanordnung Dioden (D) mit einer geringen Flussspannung verwendet werden.

6. Verfahren nach Anspruch 4,
**dadurch gekennzeichnet,**
**dass** als Dioden (D) Schottkydioden verwendet werden.

7. Verfahren nach einem der vorangegangenen Ansprüche,
**dadurch gekennzeichnet,**
**dass** bei einer Detektion eines Notbetriebs der Schaltanordnung zumindest bei einer Baugruppe (11, 14) die Spannungsversorgung aufrechterhalten wird.

8. Verfahren nach Anspruch 6,
**dadurch gekennzeichnet,**
**dass** von einer Spannungsüberwachung (12) die Spannung der Schaltanordnung überwacht wird.

9. Verfahren nach den Ansprüchen 6 und 7,
**dadurch gekennzeichnet,**
**dass** bei Detektion des Notbetriebs der Schaltanordnung die Stromversorgung zu mindestens einer Baugruppe (14) unterbrochen wird.

10. Schaltanordnung mit elektrochemischen Spannungsquellen (B) zur Spannungsversorgung eines drahtlos betriebenen Gefahrenmelders bei einem Notbetrieb der Schaltanordnung,
- mit einer in Sperrichtung parallel geschalteten Diode (D) zu jeder in Serie geschalteten elektrochemischen Spannungsquelle (B), wobei die Anzahl der zu verwendenden chemischen Spannungsquellen (B) derart gewählt wird, dass bei einem Ausfall einer Spannungsquelle (B) die für den Gefahrenmelder erforderliche Betriebsspannung zuzüglich der Flussspannung einer der in Sperrrichtung parallel geschalteten Dioden (D) erzeugt werden kann.
